# DEMANDE DE BREVET EUROPEEN

(11) **EP 1 571 800 A1**
(43) Date de publication de la demande: **07.09.2005**
(21) Numéro de dépôt: 04290583.6
(22) Date de dépôt: 03.03.2004
(51) Int. Cl.: H04L 29/06

(54) **Procédé et système d'accès par un client à des services fournis par un fournisseur de services**

(71) Demandeur: FRANCE TELECOM, 75015 Paris (FR)
(72) Inventeur: Minodier, David, 22560 Pleumeur Bodou (FR); Ivanoff, Gilles, 22560 Trebeurden (FR)
(74) Mandataire: Maillet, Alain

(57) **Abrégé**

L'invention concerne un procédé et un système d'accès par un client (110a, 1 10b, 110c) à des services fournis par un fournisseur de services (160, 170, 180), le client étant apte à transmettre et/ou recevoir des informations dans une session point à point avec un concentrateur de sessions (100) par l'intermédiaire d'un réseau de télécommunication (150) dans lequel un protocole de contrôle d'accès est utilisé pour contrôler l'accès aux services fournis par le fournisseur de services et dans lequel on détermine la conformité ou non du client avec le protocole de contrôle d'accès, on autorise le client non conforme à accéder à un réseau pour clients non conformes (140), on établit session point à point entre le client et le concentrateur de sessions et le concentrateur de sessions transfère les informations transmises par le client vers un réseau pour clients conformes (161, 162, 163) au protocole de contrôle d'accès.

## Description

La présente invention concerne un procédé et un système d'accès par un client à des services fournis par un fournisseur de services.

L'invention se situe dans le domaine de l'accès par un client à des services fournis par un fournisseur de services dans lequel le client est apte à transmettre et/ou recevoir des informations selon un protocole de transport point à point par l'intermédiaire d'un réseau de télécommunication et d'un concentrateur de sessions apte à transmettre et/ou recevoir des informations selon le protocole de transport point à point, et dans lequel un protocole de contrôle d'accès est utilisé dans le réseau de télécommunication pour contrôler l'accès aux services fournis par le fournisseur de services.

Dans les systèmes classiques d'accès à l'Internet utilisant des liaisons par exemple de type DSL, chaque client est relié à un multiplexeur numérique de lignes de clients qui est lui-même connecté à un concentrateur de sessions PPP. DSL est l'acronyme de « Digital Subscriber Line », PPP est l'acronyme de « Point to Point Protocol ». Une session PPP est une session établie selon un protocole point à point tel que par exemple le protocole défini dans la recommandation de l'IETF RFC 2516. Un concentrateur de sessions PPP est classiquement appelé un BAS, acronyme de « Broadband Access Server ». Un concentrateur de sessions PPP achemine les sessions établies par les différents clients du réseau vers le point de présence du fournisseur de services auquel ils sont abonnés.

Les réseaux de télécommunication utilisés dans l'état de la technique sont basés sur la technologie ATM, acronyme de « Asynchronous Transfer Mode ». Lorsqu'un nouveau client désire s'abonner à des services proposés par un fournisseur de services de type DSL, un canal virtuel ATM VC est créé par un opérateur entre le modem DSL du nouveau client et le serveur BAS. Les canaux virtuels des clients abonnés au même fournisseur de services, voire à un service du fournisseur de services, sont groupés dans de mêmes chemins virtuels ou VP entre les différents multiplexeurs numériques de lignes de clients et le concentrateur de sessions PPP. Les réseaux de télécommunications basés sur la technologie ATM sont complexes et difficiles à faire évoluer.

Le déploiement de réseaux basés sur d'autres technologies que l'ATM est envisagé. Les réseaux de type GigaEthernet © offrent une bande passante très importante pour la transmission d'informations. Ces réseaux utilisent des protocoles d'accréditation pour l'accès à un réseau tels que par exemple le protocole défini dans la norme IEEE 802.1x. Ces réseaux de télécommunication ne sont pas compatibles avec les technologies couramment utilisées dans les réseaux de télécommunication basés sur la technologie ATM et une éventuelle utilisation de ces réseaux nécessiterait une complète modification du réseau de télécommunication ainsi que des moyens dont disposent les clients reliés au réseau de télécommunication. Dans ces réseaux de télécommunication, les clients n'ont pas à établir de sessions PPP avec un concentrateur de sessions PPP.

L'invention a pour but de résoudre les inconvénients de l'art antérieur en proposant un procédé et un système d'accès par un client à des services fournis par un fournisseur de services dans lesquels des clients conformes aux protocoles utilisés dans les réseaux de télécommunication utilisant le protocole de transport point à point puissent accéder aux services fournis par un fournisseur de services par l'intermédiaire d'un réseau de télécommunication même si le réseau assurant l'accès aux services fournis par un fournisseur de services utilise un protocole de contrôle d'accès prédéterminé et/ou l'accès aux services fournis par un fournisseur de services n'est pas soumis à un établissement de sessions PPP.

A cette fin, selon un premier aspect, l'invention propose un procédé d'accès par un client à des services fournis par un fournisseur de services, le client étant apte à transmettre et/ou recevoir des informations selon un protocole de transport point à point par l'intermédiaire d'un réseau de télécommunication et d'un concentrateur de sessions apte à transmettre et/ou recevoir des informations selon le protocole de transport point à point, caractérisé en ce qu'un protocole de contrôle d'accès est utilisé dans le réseau de télécommunication pour contrôler l'accès aux services fournis par le fournisseur de services et en ce qu'il comporte les étapes de :
- détermination de la conformité ou non du client avec le protocole de contrôle d'accès,
- d'autorisation du client non conforme avec le protocole de contrôle d'accès à accéder à un réseau pour clients non conformes, le réseau pour clients non conformes étant établi sur le réseau de télécommunication et permettant l'accès au concentrateur de sessions,
- d'établissement d'une session entre le client et le concentrateur de sessions selon le protocole de transport point à point sur le réseau pour clients non conformes,
- de transfert, par le concentrateur de sessions, des informations transmises par le client dans la session établie vers un réseau pour clients conformes au protocole de contrôle d'accès, le réseau pour clients conformes étant établi sur le réseau de télécommunication et permettant l'accès aux services fournis par le fournisseur de services et réciproquement.

Corrélativement, l'invention concerne un système pour l'accès par un client à des services fournis par un fournisseur de services, le client étant apte à transmettre et/ou recevoir des informations selon un protocole de transport point à point par l'intermédiaire d'un réseau de télécommunication et d'un concentrateur de sessions apte à transmettre et/ou recevoir des informations selon le protocole de transport point à point, caractérisé en ce qu'un protocole de contrôle d'accès est utilisé dans le réseau de télécommunication pour contrôler l'accès aux services fournis par le fournisseur de services et en ce que le système comporte :
- des moyens de détermination de la conformité ou non du client avec le protocole de contrôle d'accès,
- des moyens d'autorisation du client non conforme avec le protocole de contrôle d'accès à accéder à un réseau pour clients non conformes, le réseau pour clients non conformes étant établi sur le réseau de télécommunication et permettant l'accès au concentrateur de sessions,
- des moyens d'établissement d'une session entre le client et le concentrateur de sessions selon le protocole de transport point à point sur le réseau pour clients non conformes
- des moyens de transfert, par le concentrateur de sessions, des informations transmises par le client dans la session établie vers un réseau pour clients conformes au protocole de contrôle d'accès, le réseau pour clients conformes étant établi sur le réseau de télécommunication et permettant l'accès aux services fournis par le fournisseur de services et réciproquement.

Ainsi, il est possible, pour un client apte à transmettre et/ou recevoir des informations selon un protocole de transport point à point, d'accéder à des services fournis par un fournisseur de services même si celui-ci n'est pas compatible avec le protocole de contrôle d'accès permettant d'accéder aux services de fournisseurs de services. En autorisant le client à accéder à un réseau pour clients non conformes, le client peut accéder à un concentrateur de sessions apte à transmettre et/ou recevoir des informations selon le protocole de transport point à point. Le concentrateur de sessions peut ainsi transmettre les informations transmises par le client vers un réseau pour clients conformes et ainsi permettre l'accès aux services fournis par le fournisseur de services.

Selon un autre aspect de l'invention, le concentrateur de sessions détermine parmi les informations transmises par le fournisseur de services dans le réseau pour clients conformes, des informations à destination du client non conforme et transfère les informations déterminées au client non conforme dans la session établie entre le client et le concentrateur de sessions.

Ainsi, un client non conforme peut recevoir des informations d'un fournisseur de services ou d'un service d'un fournisseur de services.

Selon un autre aspect de l'invention, plusieurs fournisseurs de services sont accessibles par des clients, chaque fournisseur de services étant accessible par au moins un réseau pour clients conformes au protocole de contrôle d'accès et le concentrateur de sessions détermine le réseau pour clients conformes au protocole de contrôle d'accès permettant d'accéder au fournisseur de service du client non conforme et transfère des informations transmises par le client non conforme dans la session établie vers le réseau pour clients conformes déterminé.

Ainsi, en utilisant au moins un réseau pour clients conformes pour chaque fournisseur de services, il est possible de répartir le réseau de télécommunication en différents réseaux indépendants les uns des autres.

Selon un autre aspect de l'invention, lors de l'établissement de la session entre le client et le concentrateur de sessions, le concentrateur de sessions reçoit au moins un message de diffusion émis par le client sur le réseau pour clients non conformes, le message de diffusion comprenant au moins l'adresse du client et le concentrateur de sessions transfère sur le réseau pour clients non conformes au moins un message de requête d'identification à destination du client.

Ainsi, il est possible de déterminer quel client tente d'accéder aux services des fournisseurs de services.

Selon un autre aspect de l'invention, lors de l'établissement de la session entre le client et le concentrateur de sessions, le concentrateur de sessions reçoit au moins un message comprenant au moins un identifiant émis par le client sur le réseau pour clients non conformes, transfère l'identifiant à un serveur d'authentification, obtient un authentifiant du client, transfère l'authentifiant au serveur d'authentification et établit la session si le serveur d'authentification authentifie le client.

Ainsi, il est possible d'autoriser l'accès aux services proposés par les fournisseurs de services seulement aux clients abonnés aux services proposés par les fournisseurs de services.

Selon un autre aspect de l'invention, le client accède au réseau de télécommunication par l'intermédiaire d'un multiplexeur numérique de lignes de clients et le multiplexeur numérique de lignes de clients détermine la conformité ou non du client avec le protocole de contrôle d'accès.

Selon un autre aspect de l'invention, si le client est conforme au protocole de contrôle d'accès, le multiplexeur numérique de lignes de clients autorise le client conforme avec le protocole de contrôle d'accès à accéder à un réseau pour clients conformes, le réseau pour clients conformes étant établi sur le réseau de télécommunication et permettant l'accès à un fournisseur de services.

Ainsi, les clients conformes peuvent accéder directement aux réseaux permettant l'accès à un fournisseur de services sans qu'il soit nécessaire d'établir une session PPP conforme au protocole de transport point à point tel que par exemple le protocole conforme à la RFC 2516.

Selon un autre aspect de l'invention, plusieurs fournisseurs de services sont accessibles par des clients, chaque fournisseur de services étant accessible par au moins un réseau pour clients conformes au protocole de contrôle d'accès et le multiplexeur numérique de lignes de clients détermine le réseau pour clients conformes au protocole de contrôle d'accès permettant d'accéder au fournisseur de services du client conforme et transfère les informations transmises par le client conforme vers le réseau pour clients conformes déterminé.

Ainsi, il est possible de catégoriser et de regrouper les clients selon le fournisseur de services auquel ils sont abonnés, voire selon le service auquel ils sont abonnés et ainsi de limiter les services auxquelles les clients ont accès.

Selon un autre aspect de l'invention, le réseau de télécommunication est un réseau de type GigaEthernet ©, le protocole de contrôle d'accès est un protocole de type IEEE 802.1x, et le protocole de transport point à point est un protocole conforme à la recommandation RFC 2516.

Selon un autre aspect de l'invention, les informations transmises selon le protocole de transport point à point sont sous forme de paquets et le concentrateur de sessions, préalablement au transfert des informations transmises par le client dans la session établie vers un réseau pour clients conformes au protocole de contrôle d'accès, forme à partir des paquets des trames d'informations.

L'invention concerne aussi les programmes d'ordinateurs stockés sur un support d'informations, lesdits programmes comportant des instructions permettant de mettre en oeuvre le procédé précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système d'accès à des services fournis par des fournisseurs de services par un client conforme ou non à un protocole d'authentification et de contrôle d'accès par l'intermédiaire d'un réseau de télécommunication;
la Fig. 2 représente l'algorithme mis en oeuvre par un multiplexeur numérique du réseau de télécommunication de lignes de clients pour l'accès à des services fournis par des fournisseurs de services par un client conforme ou non à un protocole d'authentification et de contrôle d'accès ;
la Fig. 3 représente l'algorithme mis en oeuvre par un concentrateur de sessions du réseau de télécommunication pour l'accès à des services fournis par des fournisseurs de services par un client non conforme à un protocole d'authentification et de contrôle d'accès.

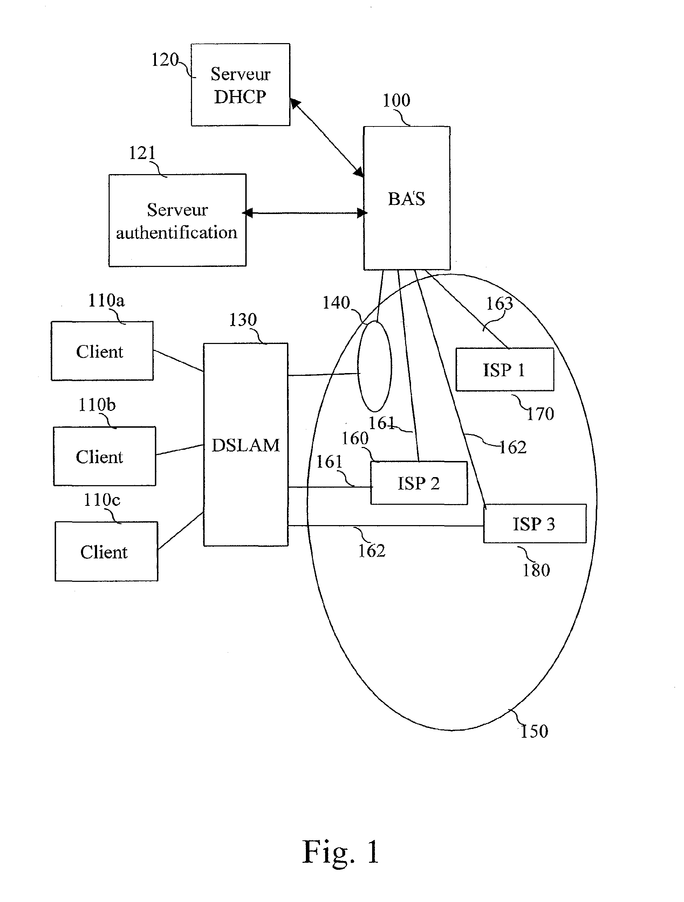

La Fig. 1 représente l'architecture du système d'accès à des services fournis par des fournisseurs de services par un client conforme ou non à un protocole d'authentification et de contrôle d'accès par l'intermédiaire d'un réseau de télécommunication.

Dans le système d'accès à des services fournis par des fournisseurs de services par un client non conforme à un protocole contrôle d'accès par l'intermédiaire d'un réseau de télécommunication 150, des clients 110a, 110b et 110c accèdent à des fournisseurs de services 160, 170 et 180 par l'intermédiaire d'un multiplexeur numérique de lignes de clients 130, d'un réseau de télécommunication 150 et d'un concentrateur de sessions PPP 100.

Selon l'invention, le multiplexeur numérique de lignes de clients 130 détermine si un client 110 est conforme ou non à un protocole de contrôle d'accès et oriente les communications du client non conforme 110 vers un réseau pour clients non conformes au protocole de contrôle d'accès. Le réseau pour clients non conformes au protocole de contrôle d'accès est préférentiellement un réseau virtuel établi sur le réseau de télécommunication 150. Le réseau pour clients non conformes 140 peut aussi être en variante un réseau physique distinct du réseau de télécommunication 150.

Un concentrateur de sessions PPP 100 est relié au réseau pour clients non conformes 140 et transfère les messages émis par le client 110 non conforme vers un réseau pour clients conformes 161, 162 ou 163 après mise en forme des messages émis par le client 110. Une session PPP est une session établie selon un protocole point à point.

Les réseaux pour clients conformes 161, 162 ou 163 permettent ainsi l'accès à des services fournis par des fournisseurs de services 160, 170 et 180. Les réseaux pour clients conformes au protocole de contrôle d'accès sont préférentiellement des réseaux virtuels établis sur le réseau de télécommunication 150 et dans lesquels il n'est pas nécessaire d'établir une session PPP pour accéder aux services fournis par les fournisseurs de services.

Le multiplexeur numérique de lignes de clients 130 est relié à des clients 110a, 110b et 110c par des liaisons physiques dédiées. Lorsque les liaisons physiques dédiées sont de type DSL, le multiplexeur numérique de lignes de clients 130 est connu sous le terme DSLAM. DSLAM est l'acronyme de « Digital Subscriber Line Access Multiplexor ». Le multiplexeur numérique de lignes de clients 130 a pour fonction de regrouper plusieurs lignes de clients 110a, 110b et 110c sur un support physique qui assure le transport des données échangées entre les clients 110a, 110b et 110c et leurs fournisseurs de services respectifs 160, 170 ou 180. Le multiplexeur numérique de lignes de clients 130 est relié au réseau de télécommunication 150 qui est par exemple un réseau de type GigaEthernet ©.

Des réseaux pour clients conformes 161 et 162 sont établis sur le réseau de télécommunication 150 entre le multiplexeur numérique de lignes de clients 130 et chaque fournisseur de services 160 et 180. Les informations véhiculées sur les réseaux pour clients conformes 161 et 162 sont transmises sous la forme de trames Ethernet. Un réseau pour clients non conformes 140, distinct des réseaux pour clients conformes 161 et 162 est aussi établi pour l'accès, par un client non conforme à un protocole de contrôle d'accès, aux services fournis par des fournisseurs de services par un client non conforme à un protocole de contrôle d'accès. Le protocole de contrôle d'accès est plus précisément un protocole d'authentification et de contrôle d'accès tel que par exemple le protocole IEEE 802.1x.

Les réseaux pour clients conformes 161 et 162 sont préférentiellement des réseaux virtuels. Les réseaux virtuels ou VLAN, acronyme de « Virtual Local Area Network », permettent de catégoriser les clients et ainsi de limiter les ressources auxquelles ils ont accès. Par exemple, si le client 110b est client du fournisseur de services 160, les échanges entre le client 110b et le fournisseur de services 160 sont effectués par l'intermédiaire du VLAN symbolisé par les liaisons notées 161 en Fig. 1.

Un ou plusieurs réseaux virtuels peuvent aussi être associés à un ou plusieurs services du fournisseur de services 160.

Les clients 110a, 110b et 110c sont plus précisément des terminaux de télécommunication. Les clients 110 sont reliés au multiplexeur numérique de lignes de clients 130 par l'intermédiaire du réseau téléphonique commuté et utilisent les techniques de modulation de type DSL. Bien entendu d'autres types de liaisons point à point peuvent être utilisées. Par exemple et de manière non limitative, ces liaisons peuvent être aussi des liaisons sans fils ou des liaisons par fibres optiques. Un client 110 est par exemple un dispositif de télécommunication tel qu'un ordinateur comprenant une carte de communication adaptée à la liaison existant avec le multiplexeur numérique de lignes de clients 130 ou un ordinateur relié à un dispositif de communication externe adaptée à la liaison existant avec le multiplexeur numérique de lignes de clients 130. En Fig. 1 seulement trois clients 110a, 110b et 110c sont représentés. Bien entendu, un nombre plus important de clients 110 sont reliés au multiplexeur numérique de lignes de clients 130.

Le concentrateur de sessions PPP 100 est classiquement appelé un BAS, acronyme de « Broadband Access Server ». Le concentrateur de sessions PPP 100 achemine les sessions établies avec les différents clients non conformes 110 vers le fournisseur de services 160, 170 ou 180 auquel ils sont abonnés. Pour cela, le concentrateur de sessions PPP 100 est relié au réseau pour clients non conformes 140 et est apte à détecter des messages de diffusion conformes au protocole PPP émis par un client 110 non conforme sur le réseau pour clients non conformes 140, à établir avec le client non conforme une session selon un protocole de transport point à point, à déterminer le fournisseur de services auquel le client non conforme est abonné et à transférer les informations transmises par le client non conforme selon le protocole de transport point à point sur le réseau pour clients non conformes 140 vers le réseau pour clients conformes 161 ou 162 ou 163 auxquels sont reliés respectivement les fournisseurs de services 160, 180 et 170.

Le concentrateur de sessions PPP 100 détermine parmi les informations transmises par les fournisseurs de services 160, 170, 180 dans les réseaux pour clients conformes 161, 162 et 163, les informations à destination des clients non conformes qui ont une session PPP établie avec le concentrateur de sessions PPP 100. Le concentrateur de sessions PPP 100 met en forme les informations déterminées de manière à ce que celles-ci soient compatibles avec le protocole de transport point à point et transfère ces informations mises en forme dans la session établie entre le client destinataire de ces informations et le concentrateur de sessions.

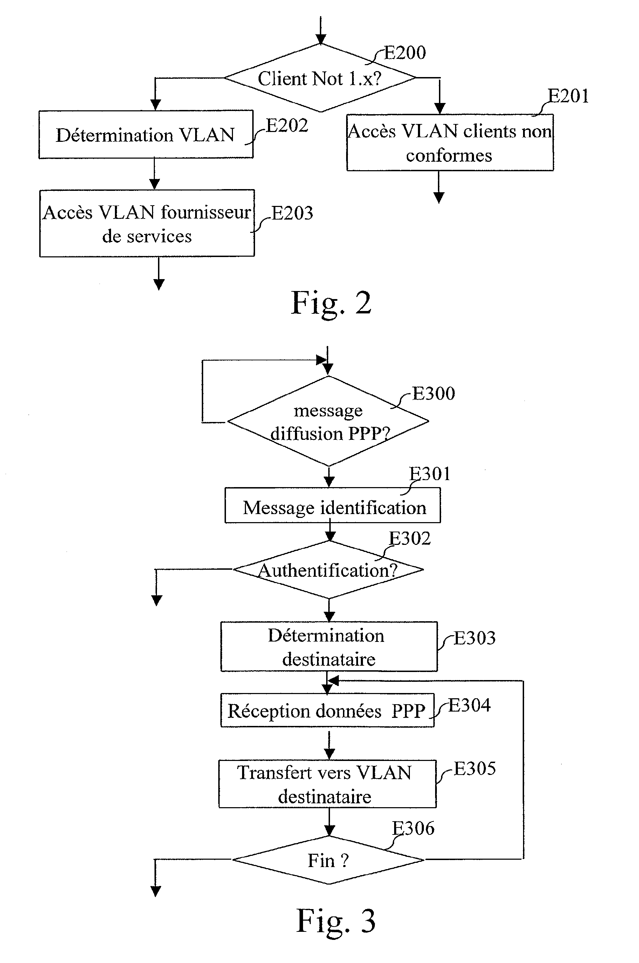

Au concentrateur de sessions PPP 100 sont associés un serveur DHCP 120 et un serveur d'accréditation 121. Le serveur DHCP 120 distribue des adresses IP aux clients 110 lorsqu'ils souhaitent accéder aux services proposés par un fournisseur de services 160 ou 170 ou 180. DHCP est l'acronyme de « Dynamic Host Configuration Protocol ». Le serveur d'authentification 121 authentifie un client 110 auprès du concentrateur de sessions PPP 100 lorsque le client 110 désire accéder à un fournisseur de services 160, 170 ou 180. Cette authentification est effectuée à partir de l'identifiant du client 110 tel que son nom d'utilisateur et la fourniture par le client 110 d'un matériel d'authentification tel qu'un mot de passe. Cette authentification sera décrite plus en détail en regard de la Fig. 3.

Il est à remarquer aussi que le serveur DHCP peut aussi être en variante un serveur relais ou « proxy » DHCP qui redirige les informations transférées vers des serveurs DHCP (non représentés en Fig. 1) associés à chaque fournisseur de services 160, 170 et 180.

Un proxy est un équipement qui reçoit des informations d'un premier dispositif de télécommunication et transfère celles-ci vers un second dispositif de télécommunication, et réciproquement qui reçoit des informations du second dispositif de télécommunication et transfère celles-ci vers le premier dispositif de télécommunication.

En variante, le serveur d'authentification 121 peut aussi être un proxy serveur d'authentification qui redirige les informations transférées vers des serveurs d'authentification (non représentés en Fig. 1) associés à chaque fournisseur de services 160, 170 et 180. Selon cette variante, chaque serveur d'authentification associé à un fournisseur de services mémorise tous les clients autorisés à accéder aux services proposés par le fournisseur de services auquel il est associé ainsi que l'identifiant et le matériel d'authentification de chaque client.

Les fournisseurs de services 160, 170 et 180 offrent différents services à leurs clients respectifs. Ces services sont par exemple et de manière non limitative des services d'accès à Internet, des services de vidéo à la demande, des services de courrier électronique, des services de téléphonie sur le réseau Internet, des services de visioconférence sur Internet, etc.

La Fig. 2 représente l'algorithme mis en oeuvre par un multiplexeur numérique du réseau de télécommunication de lignes de clients pour l'accès à des services fournis par des fournisseurs de services par un client conforme ou non à un protocole d'authentification et de contrôle d'accès.

A l'étape E200, le multiplexeur numérique de lignes de clients 130 détecte la présence d'un client 110 sur une des liaisons physiques dédiées. A cette étape le processeur 200 vérifie si le client est compatible avec le protocole de contrôle d'accès tel que par exemple le protocole IEEE 802.1x. Ceci est par exemple déterminé en vérifiant si les informations transmises par le client 110 sont conformes au protocole EAPOL, acronyme de « EAP Over Lan » et où EAP est l'acronyme de « Extensible Authentication Protocol » ou protocole d'authentification extensible. Dans l'affirmative, le processeur 200 passe à l'étape E202, dans la négative, le processeur 200 passe à l'étape E201.

A l'étape E201, le multiplexeur numérique de lignes de clients 130 autorise le client 110 non conforme, par exemple le client 110a à accéder à un réseau pour clients non conformes 140.

A l'étape E202, le multiplexeur numérique de lignes de clients 130 détermine le réseau pour clients conformes au protocole de contrôle d'accès 161 ou 162 permettant d'accéder au fournisseur de services 160 ou 180 du client conforme 110.

A l'étape E203, le multiplexeur numérique de lignes de clients 130 autorise le client 110 conforme, par exemple le client 110b à accéder au réseau pour clients conformes 161 ou 162 auquel est relié son fournisseur de services 160 ou 180. Les informations transmises par le client conforme 110b sont alors transférées vers le réseau pour clients conformes déterminé. Il est à remarquer que l'autorisation d'accès est dans ce cas soumise à une procédure d'authentification.

Il est aussi à remarquer ici que le multiplexeur numérique de lignes de clients 130 ayant vérifié que les clients sont conformes à un protocole de contrôle d'accès autorise ceux-ci à accéder à un réseau 161 ou 162 dans lequel des sessions PPP ne sont pas utilisées pour l'accès aux services fournis par les fournisseurs de services 160 ou 180. Le multiplexeur numérique de lignes de clients 130 en déterminant que les clients ne sont pas conformes à un protocole de contrôle d'accès autorise ceux-ci à accéder à un réseau 140 dans lequel des sessions PPP peuvent être utilisées pour l'accès aux services fournis par les fournisseurs de services 160, 170 ou 180.

La Fig. 3 représente l'algorithme mis en oeuvre par un concentrateur de sessions du réseau de télécommunication pour l'accès à des services fournis par des fournisseurs de services par un client non conforme à un protocole d'authentification et de contrôle d'accès.

L'étape E300 consiste en une boucle d'attente de la réception d'un message de diffusion en provenance du réseau pour clients non conformes 140. Le message de diffusion est par exemple conforme au protocole PPPoE. PPPoE est l'acronyme de « Point to Point Protocol over Ethernet ». Le protocole de transport point à point PPPoE permet de transporter des datagrammes multi-protocoles à travers une liaison point à point. Le message de diffusion est émis par un client non conforme sur le réseau pour clients non conformes 140. En effet, selon le protocole PPPoE, chaque session PPP doit apprendre l'adresse Ethernet de la machine distante afin d'établir et d'identifier une session unique. Ce message de diffusion comprend l'adresse du client 110 non conforme, adresse destinataire prédéterminée, identifiée comme adresse de diffusion et un identificateur de session. A la réception d'un message de diffusion, le concentrateur de sessions PPP 100 passe à l'étape suivante E301.

A cette étape, un message d'identification est envoyé par le concentrateur de sessions PPP 100 au client 110 dont le message de diffusion a été précédemment détecté par l'intermédiaire du réseau virtuel 140.

L'étape suivante E302 est une étape d'interprétation du résultat de la requête d'authentification pour le client 110. Le résultat de la requête d'authentification est délivré par le serveur d'authentification 121. Du résultat de la requête d'authentification dépend l'établissement ou non d'une session PPP entre le client et le concentrateur de session, qui, si établie, permettra de facto au client d'accéder aux services des fournisseurs de services 160, 180 ou 170. Si l'authentification du client 110 a échoué, le concentrateur de sessions PPP 100 interdit l'établissement de la session entre le client 110 et le concentrateur de sessions PPP 100. Ainsi, le client ne peut accéder à aucun des fournisseurs de services 160, 170 et 180.

Plus précisément, le concentrateur de sessions PPP 100 reçoit au moins un message comprenant au moins un identifiant émis par le client 110 sur le réseau pour clients non conformes 140, le concentrateur de sessions PPP 100 transfère l'identifiant au serveur d'authentification 121 qui reconnaît ou pas le client 110 comme ayant un identifiant connu par le serveur d'authentification 121. Si le serveur d'authentification 121 reconnaît le client 110, celui-ci génère un message à destination du concentrateur de sessions PPP 100 pour que celui-ci obtienne l'authentifiant du client 110. Lorsque le concentrateur de sessions PPP 100 a obtenu cet authentifiant du client 110, l'authentifiant est transféré au serveur d'authentification 121 qui authentifie ou non le client 110. Si l'authentification du client 110 est confirmée, le concentrateur de sessions PPP 100 passe à l'étape suivante E303.

Le concentrateur de sessions PPP 100 détermine à l'étape E303 le fournisseur de services auquel le client 110 est abonné. Ceci est par exemple effectué en analysant le message d'identification précédemment reçu du client 110 à l'étape E302.

A l'étape E304, la session PPP est établie entre le client 110 et le concentrateur de sessions PPP 100. Le concentrateur de sessions PPP 100 reçoit du client 110, par l'intermédiaire du réseau virtuel 140, des informations conformément au protocole de transport point à point.

Le concentrateur de sessions PPP 100 transfère ensuite à l'étape E305 les informations reçues sur le réseau pour clients conformes 161, 162 ou 163 correspondant au fournisseur de services auquel est abonné le client 110. Il est à remarquer ici que les informations transportées sous la forme de paquets conformément au protocole de transport point à point sont préalablement mises en forme pour former des trames de type Ethernet. Il est aussi à remarquer qu'un paquet consiste en une trame de type Ethernet encapsulée conformément au protocole PPP.

Cette opération effectuée, le concentrateur de sessions PPP 100 retourne à l'étape E304 et exécute la boucle constituée des étapes E304 à E306 tant que la session PPP entre le client 110 et le concentrateur de sessions 100 reste établie. La session PPP est interrompue lorsque le client 110 se déconnecte conformément au protocole PPP ou qu'un évènement exceptionnel survient. Cet événement est par exemple un ordre explicite envoyé au concentrateur de session PPP 100 d'interrompre une session, une rupture d'un lien dans le réseau pour clients non conformes 140, ou autre.

Il est à remarquer ici que le concentrateur de sessions PPP 100, en parallèle des étapes E304 et E306, détermine, parmi les informations transmises par les fournisseurs de services 160, 170, 180 dans les réseaux pour clients conformes 161, 162 et 163, les informations à destination des seuls clients non conformes qui ont une session PPP établie avec le concentrateur de sessions PPP 100. Le concentrateur de sessions PPP 100 met en forme les informations déterminées de manière à ce que celles-ci soient compatibles avec le protocole de transport point à point et transfère ces informations mises en forme dans la session établie entre le client destinataire de ces informations et le concentrateur de sessions.

Bien entendu, la présente invention n'est nullement limitée aux modes de réalisation décrits ici, mais englobe, bien au contraire, toute variante à la portée de l'homme du métier.

## Revendications

1. Procédé d'accès par un client (110a, 110b, 110c) à des services fournis par un fournisseur de services (160, 170, 180), le client étant apte à transmettre et/ou recevoir des informations selon un protocole de transport point à point par l'intermédiaire d'un réseau de télécommunication (150) et d'un concentrateur de sessions (100) apte à transmettre et/ou recevoir des informations selon le protocole de transport point à point, **caractérisé en ce qu'**un protocole de contrôle d'accès est utilisé dans le réseau de télécommunication pour contrôler l'accès aux services fournis par le fournisseur de services et **en ce que** le procédé comporte les étapes de :
- détermination (E200) de la conformité ou non du client avec le protocole de contrôle d'accès,
- autorisation (E201) du client non conforme avec le protocole de contrôle d'accès à accéder à un réseau pour clients non conformes, le réseau pour clients non conformes étant établi sur le réseau de télécommunication et permettant l'accès au concentrateur de sessions,
- établissement (E302) d'une session entre le client et le concentrateur de sessions selon le protocole de transport point à point sur le réseau pour clients non conformes,
- transfert, (E305) par le concentrateur de sessions, des informations transmises par le client dans la session établie vers un réseau pour clients conformes (161, 162, 163) au protocole de contrôle d'accès, le réseau pour clients conformes étant établi sur le réseau de télécommunication et permettant l'accès aux services fournis par le fournisseur de services et réciproquement.

2. Procédé selon la revendication 1, **caractérisé en ce que** le procédé comporte en outre les étapes, effectuées par le concentrateur de sessions, de :
- détermination (E303) parmi les informations transmises par le fournisseur de services dans le réseau pour clients conformes, d'informations à destination du client non conforme,
- transfert des informations déterminées au client non conforme dans la session établie entre le client et le concentrateur de sessions.

3. Procédé selon la revendication 1 ou 2, **caractérisé en ce que** plusieurs fournisseurs de services sont accessibles par des clients, chaque fournisseur de services étant accessible par au moins un réseau pour clients conformes au protocole de contrôle d'accès et **en ce que** le procédé comporte en outre une étape effectuée par le concentrateur de sessions de détermination du réseau pour clients conformes au protocole de contrôle d'accès permettant d'accéder au fournisseur de service du client non conforme et de transfert des informations transmises par le client non conforme dans la session établie vers le réseau pour clients conformes déterminé.

4. Procédé selon l'une quelconques des revendications 1 à 3, **caractérisé en ce que** l'étape d'établissement de la session entre le client et le concentrateur de sessions se décompose en sous étapes effectuées par le concentrateur de sessions de :
- réception d'au moins un message de diffusion émis par le client sur le réseau pour clients non conformes, le message de diffusion comprenant au moins l'adresse du client,
- transfert sur le réseau pour clients non conformes d'au moins un message de requête d'identification à destination du client.

5. Procédé selon la revendication 4, **caractérisé en ce que** l'étape d'établissement de la session entre le client et le concentrateur de sessions comporte en outre les sous étapes effectuées par le concentrateur de sessions de :
- réception d'au moins un message comprenant au moins un identifiant émis par le client sur le réseau pour clients non conformes,
- transfert de l'identifiant à un serveur d'authentification,
- obtention d'un authentifiant du client et transfert de l'authentifiant au serveur d'authentification,
- établissement de la session si le serveur d'authentification authentifie le client.

6. Procédé selon l'une quelconque des revendications 1 à 5, **caractérisé en ce que** le client accède au réseau de télécommunication par l'intermédiaire d'un multiplexeur numérique de lignes de clients (130) et **en ce que** le multiplexeur numérique de lignes de clients détermine la conformité ou non du client avec le protocole de contrôle de contrôle d'accès.

7. Procédé selon la revendication 6, **caractérisé en ce que** si le client est conforme au protocole de contrôle d'accès, le multiplexeur numérique de lignes de clients autorise le client conforme avec le protocole de contrôle d'accès à accéder à un réseau pour clients conformes (161, 162), le réseau pour clients conformes étant établi sur le réseau de télécommunication et permettant l'accès à un fournisseur de services.

8. Procédé selon la revendication 7, **caractérisé en ce que** plusieurs fournisseurs de services sont accessibles par des clients, chaque fournisseur de services étant accessible par au moins un réseau pour clients conformes au protocole de contrôle d'accès et **en ce que** le procédé comporte en outre une étape, effectuée par le multiplexeur numérique de lignes de clients, de détermination (E202) du réseau pour clients conformes au protocole de contrôle d'accès permettant d'accéder au fournisseur de services du client conforme et de transfert des informations transmises par le client conforme vers le réseau pour clients conformes déterminé.

9. Procédé selon la revendication 7, **caractérisé en ce que** le réseau de télécommunication est un réseau de type GigaEthernet ©, le protocole de contrôle d'accès est un protocole de type 802.1x, et **en ce que** le protocole de transport point à point est un protocole conforme à la recommandation RFC 2516.

10. Procédé selon la revendication 9, **caractérisé en ce que** les informations transmises selon le protocole de transport point à point sont sous forme de paquets et **en ce que** le concentrateur de sessions, préalablement au transfert des informations transmises par le client dans la session établie vers un réseau pour clients conformes au protocole de contrôle d'accès, forme à partir des paquets des trames d'informations.

11. Système pour l'accès par un client à des services fournis par un fournisseur de services, le client étant apte à transmettre et/ou recevoir des informations selon un protocole de transport point à point par l'intermédiaire d'un réseau de télécommunication et d'un concentrateur de sessions apte à transmettre et/ou recevoir des informations selon le protocole de transport point à point, **caractérisé en ce qu'**un protocole de contrôle d'accès est utilisé dans le réseau de télécommunication pour contrôler l'accès aux services fournis par le fournisseur de services et **en ce que** le système comporte :
- des moyens de détermination de la conformité ou non du client avec le protocole de contrôle d'accès,
- des moyens d'autorisation du client non conforme avec le protocole de contrôle d'accès à accéder à un réseau pour clients non conformes, le réseau pour clients non conformes étant établi sur le réseau de télécommunication et permettant l'accès au concentrateur de sessions,
- des moyens d'établissement d'une session entre le client et le concentrateur de sessions selon le protocole de transport point à point sur le réseau pour clients non conformes,
- des moyens de transfert, par le concentrateur de sessions, des informations transmises par le client dans la session établie vers un réseau pour clients conformes au protocole de contrôle d'accès, le réseau pour clients conformes étant établi sur le réseau de télécommunication et permettant l'accès aux services fournis par le fournisseur de services et réciproquement.

12. Programme d'ordinateur stocké sur un support d'informations, ledit programme comportant des instructions permettant de mettre en oeuvre le procédé selon l'une quelconque des revendications 1 à 10, lorsqu'il est chargé et exécuté par un système informatique.
